(19) Europäisches Patentamt
European Patent Office
Office européen des brevets

(11) EP 3 339 031 A1

(12) EUROPEAN PATENT APPLICATION

(43) Date of publication:
27.06.2018 Bulletin 2018/26

(51) Int Cl.:
B41J 2/025 (2006.01)   B41J 2/105 (2006.01)
B41J 2/12 (2006.01)   B41J 2/125 (2006.01)

(21) Application number: 17207683.8

(22) Date of filing: 15.12.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD TN

(30) Priority: 20.12.2016 FR 1662920

(71) Applicant: Dover Europe Sàrl
1214 Vernier (CH)

(72) Inventor: DESIDERI, Yann
26600 PONT DE l'ISERE (FR)

(74) Representative: Brevalex
95, rue d'Amsterdam
75378 Paris Cedex 8 (FR)

(54) METHOD AND DEVICE FOR DETECTING THE VELOCITY OF JETS

(57) The invention relates to a method for testing at least one nozzle of a multi-jet print head of an inkjet printer comprising a plurality of nozzles (4), at least one 1st and one 2nd deviation electrode (14a, 14b) for each jet, method in which:
- at least one jet is formed using said nozzle (9), at a drop formation frequency,
- an estimate is made of:
* a cutoff frequency (Fc) of at least this jet, by variation of the jet formation frequency, at a constant jet velocity,
* or, at constant formation frequency of the drops from at least this jet, by variation of the jet velocity, the velocity at which the cutoff frequency (Fc) is equal to said formation frequency;

- this cutoff frequency (Fc) or this velocity is compared with a reference value and the functional or non-functional state of at least said nozzle is deduced.

FIG.2

## Description

## TECHNICAL DOMAIN AND PRIOR ART

The invention relates to print heads of printers or binary continuous inkjet printers provided with a multi-nozzle drop generator.

Continuous jet printers comprise an ink drop generator and means of separating trajectories of drops produced by the generator and directing them towards a printing support or to a catcher.

The drop generator comprises nozzles aligned on a nozzle plate along a nozzle alignment axis X. During printing, these nozzles eject inkjets continuously in a direction Z perpendicular to the nozzle plate. Continuous jet printers include deviated continuous jet printers and binary continuous jet printers. Drops formed in deviated continuous jet printers from a nozzle during the time taken to print a position on a print support may or may not be deviated. For each print position and for each nozzle, a segment perpendicular to the movement direction of the print support is printed. Deviated drops are deviated such that they will strike the print support on the required part of the printed segment, considering the motif to be printed. Undeviated drops are recovered in a catcher. Deviated continuous jet printers usually comprise few ejection nozzles, but each nozzle can print several print positions on the support, i.e. several pixels distributed on the print segment depending on the motif to be printed. In binary continuous jet printers, ink from a nozzle only prints one pixel for each print position. The pixel considered does not receive any drops or receives one or several drops as a function of the motif to be printed. Consequently, for a high printing speed, the nozzle plate comprises a large number of nozzles, for example 64, to enable simultaneous printing of one pixel for each nozzle. Drops that are not required for printing are recovered in a catcher.

Due to the large number of nozzles, a problem arises in evaluating or measuring the velocity of each jet. A variation of the velocity of a single jet among a plurality of jets will create printing problems.

In particular, the velocity of the ink drops or jets or segments forms a parameter that has an influence on the print quality, because it affects the drop passage time in the means of differentiating trajectories and therefore the position of a drop at the time of its impact on the print support.

A variation from a nominal speed of the ink drops or the ink jet emitted by a single nozzle can be caused by a variation of another parameter, for example a parameter related to the ink quality.

Document US 5 160 939 (FR 2.636.884) discloses a method of measuring the velocity of drops applicable to a printer in which the drops are electrically charged. The drop velocity is measured by a single detector comprising a conducting element made in two parts, symmetric with each other relative to the trajectory of drops. This detector is placed in the cavity between charge electrodes and deflection electrodes or between deflection electrodes and the catcher. The conducting element of the detector is connected to the ground through an ammeter (measurement of the potential at the terminals of a resistance). A processing circuit is connected in parallel to the resistance. Operation is as follows: A charged drop, or a train of charged drops, induces a charge in the conducting element of the detector with a sign opposite to that of the drop of the train of drops. This charge varies depending on the position of the charged drop, or the train of charged drops, in the conducting element. The processing circuit determines times to pass through the conducting element and consequently determines an average velocity of drops during the time of this passage.

But this technique requires the presence of a detector circuit between charge electrodes and deflection electrodes. This presence introduces a disturbing element inside the cavity in which the ink drops or jets circulate.

Another problem is the detection of the functional or non-functional state of one or several of the nozzles and/or the detection of a defect or a fault in the jet(s) quality. Due to the presence of several nozzles (and of several jets), of which there can be a large number, it is difficult to identify if one or several nozzles are dysfunctional and/or if one or several jets has/have any defect, in particular in terms of its/their speed.

## BRIEF DESCRIPTION OF THE INVENTION

The first purpose of this invention is a method for testing at least one nozzle in a multi-jet print head of an inkjet printer comprising a plurality of nozzles, at least one 1st and one 2nd deviation electrode common to all jets or for each jet, in which:

- at least one jet is formed using said nozzle, at an initial frequency at which jet drops are formed,
- the following are estimated or calculated:

     * a cutoff frequency (Fc) of at least this jet, by variation of the jet formation frequency starting from said initial frequency, at a constant jet velocity,
     * or, at constant formation frequency of the drops from at least this jet (equal to said initial frequency), by variation of the jet velocity, the velocity at which the cutoff frequency (Fc) is equal to said formation frequency.

It is then possible for example to compare this cutoff frequency (Fc) or this velocity with a reference value.

The functional or non-functional state of at least said nozzle can be estimated or evaluated based on the result of said comparison.

A charge voltage can be applied to an electrode, called the charge electrode, for example one of the deviation electrodes.

According to one embodiment, a cutoff frequency (Fc) of drops from said jet is estimated, by variation of the jet formation frequency, at constant jet velocity, the cutoff frequency being estimated:

- by increasing the jet drop formation frequency, at constant jet velocity, and identification of the frequency at which the jet is no longer broken facing a charge electrode and is no longer electrically charged;
- or by reducing the jet drop formation frequency, at constant jet velocity, and identification of the frequency starting from which the jet is broken facing a charge electrode and is electrically charged.

In other words, the jet is charged using the voltage applied to the charge electrode, but is no longer charged when the jet drop formation frequency reaches a minimum value, despite the application of said charge voltage to the charge electrode.

In any embodiment the reference value can be the cutoff frequency of at least one other jet or a theoretical cutoff frequency.

According to another embodiment, the velocity for which the cutoff frequency (Fc) is equal to said formation frequency is estimated at constant jet drop formation frequency by varying the jet velocity, this velocity being estimated:

- by increasing the jet velocity and identification of the velocity for which the jet is no longer broken facing a charge electrode and is no longer electrically charged;
- or by reducing the jet velocity and identification of the velocity starting from which the jet is broken facing a charge electrode and is electrically charged.

In other words, the jet is charged using the voltage applied to the charge electrode, but is no longer charged when the jet velocity reaches a minimum value, despite the application of said charge voltage to the charge electrode.

The reference velocity can be the velocity of at least one other jet for which the jet drop formation frequency is equal to the cutoff frequency or a theoretical or nominal velocity.

During a method according to the invention, the produced and tested jet may or may not be deviated by the deviation electrodes.

A charge carried by a segment or an inkjet can be detected by a catcher, possibly mobile, for example a catcher for jets not used for printing, this catcher being made from a conducting material, for example metallic, or by an electrode.

Each nozzle of a plurality of nozzles of the multi-jet print head, for example all nozzles of the multi-jet print head, can be tested successively.

As a variant, a plurality of nozzles of the multi-jet print head, for example all nozzles of the multi-jet print head, can be tested simultaneously.

The invention also relates to a method of printing using an inkjet printer comprising a multi-jet print head, comprising:

- a step to print at least one motif on a support,
- stop printing and then implement a method of testing at least one nozzle of said multi-jet print head, according to the invention.

The invention also relates to a method of printing using an inkjet printer comprising a multi-jet print head, comprising:

- implement a method of testing at least one nozzle of said multi-jet print head, according to the invention,
- stop the test method, then implement a step to print at least one motif on a support.

During such any of these methods for printing, variable voltages in phase opposition are applied to the 1st and 2nd deviation electrodes during the print step, for example such that the temporal average of the electric field E is zero or small.

Another purpose of the invention is a device for testing at least one nozzle of a multi-jet print head of an inkjet printer, comprising a plurality of nozzles, at least one 1st and one 2nd deviation electrode for each jet, this device comprising:

a) adapted or specially programmed means of producing said ink jet by one of the nozzles, at a jet drop formation frequency,

b) means adapted or specially programmed to vary the frequency of formation of the jet drops at constant jet velocity and means for, or specially programmed for, estimating or calculating a cutoff frequency (Fc),

- or means adapted for, or specially programmed for, varying the velocity of the jet at a constant jet drop formation frequency and means for, or specially programmed for, estimating or calculating the jet velocity for which the cutoff frequency (Fc) is equal to said formation frequency.

Means may be provided for, or adapted for, or specially programmed for, comparing this cutoff frequency (Fc) or this velocity with a reference value, that may for example by the cutoff frequency of at least one other jet or a theoretical cutoff frequency or the velocity of at least one other jet for which the jet drop formation frequency is equal to the cutoff frequency or a theoretical or nominal velocity.

Means, for example at least a charge electrode, can be provided to apply a charge to the measured or tested jet produced by one of the nozzles.

A device according to the invention may comprise:

- means adapted for, or specially programmed for, increasing the jet drop formation frequency, at constant jet velocity, and means adapted for, or specially programmed for, identification of the frequency at which the jet is no longer broken facing a charge electrode and is no longer electrically charged,
- and/or means adapted for, or specially programmed for, reducing the jet drop formation frequency, at constant jet velocity, and means adapted for, or specially programmed for, identification of the frequency at which the jet is broken facing a charge electrode and is electrically charged,

In other words, the jet is charged using the voltage applied to the charge electrode, but is no longer charged when the jet drop formation frequency reaches a minimum value, despite the application of said charge voltage to the charge electrode.

A device according to the invention may comprise:

- means adapted for, or specially programmed for, increasing the jet velocity, at a constant jet drop formation frequency, and means for, or specially programmed for, identification of the velocity at which the jet is no longer broken facing a charge electrode and is no longer electrically charged,
- and/or means adapted for, or specially programmed for, reducing the jet velocity, at constant jet drop formation frequency, and means for, or specially programmed for, identification of the velocity starting from which the jet is broken facing a charge electrode and is electrically charged,

In other words, the jet is charged using the voltage applied to the charge electrode, but is no longer charged when the jet velocity reaches a minimum value, despite the application of said charge voltage to the charge electrode.

In a device or method according to the invention, means may be provided to apply or not to apply deviation voltages to the deviation electrodes.

In a device or method according to the invention, the charge electrode may for example be one of the deviation electrodes or a shielding electrode or another electrode, located downstream from the deviation electrodes relative to the trajectory of the jets at the exit from the nozzle.

A device according to the invention may comprise a jet catcher, for example the catcher for jets not used for printing, this catcher possibly being mobile, made of a metallic material (or any other electricity conducting material), or an electrode, and means of processing a charge signal detected by this catcher or this electrode.

A device according to the invention may be capable of or be specially programmed to test a plurality of nozzles of said-multi-jet print head of an ink jet printer, successively or simultaneously for each jet in the print head.

The invention also relates to a print device of the inkjet printer type comprising a multi-jet print head, comprising:

- means of, or means adapted for, or specially programmed for, printing at least one motif on a support;
- means of, or means adapted for, or specially programmed for, stopping printing and then implementing a method, according to the invention, for testing one or several nozzles of said multi-jet print head.

The invention also relates to a print device of the inkjet printer type comprising a multi-jet print head, comprising:

- means of, or means adapted for, or specially programmed for, implementing a method, according to the invention, for testing one or several nozzles of said multi-jet print head.
- means of, or means adapted for, or specially programmed for, stopping this test method, then printing at least one motif on a support.

The invention also relates to an inkjet printer comprising:

- a multi-jet print head,
- a device for, or a device or means adapted for, or specially programmed for, testing at least one nozzle of a multi-jet print head of an ink jet printer, according to the invention,
- means of supplying ink and/or solvent to the print head.

In a method or a device according to the invention one or more voltage supply/supplies may be implemented to supply the electrode(s) with the adapted voltage.

**BRIEF DESCRIPTION OF THE DRAWINGS**

An example embodiment of the invention will now be described with reference to the appended drawings among which:

- figure 1 represents a diagrammatic isometric view of a print head, showing principally the components of the print head located downstream from the nozzles.
- figure 2 represents a diagrammatic sectional view of a cavity of a print head according to one aspect of the invention, this section being taken in a plane parallel to the YZ plane and containing one of the Z axes of a nozzle,

- figures 3A and 3B represent sectional views in an XZ plane and a YZ plane respectively, of a particular embodiment of a print head

- figure 4 represents a curve that shows the variation of a break distance as a function of the activation frequency of a print head stimulation chamber,

- Figure 5 represents a diagram of an example of an electronic circuit that can be used to select one or several jets for which a test will be made,

- Figure 6 represents the main modules of an inkjet printer,

- figure 7 represents a structure of an inkjet printer to which this invention can be applied.

Similar or identical technical elements are designated by the same reference numbers on the different figures.

**DETAILED DESCRIPTION OF EMBODIMENTS**

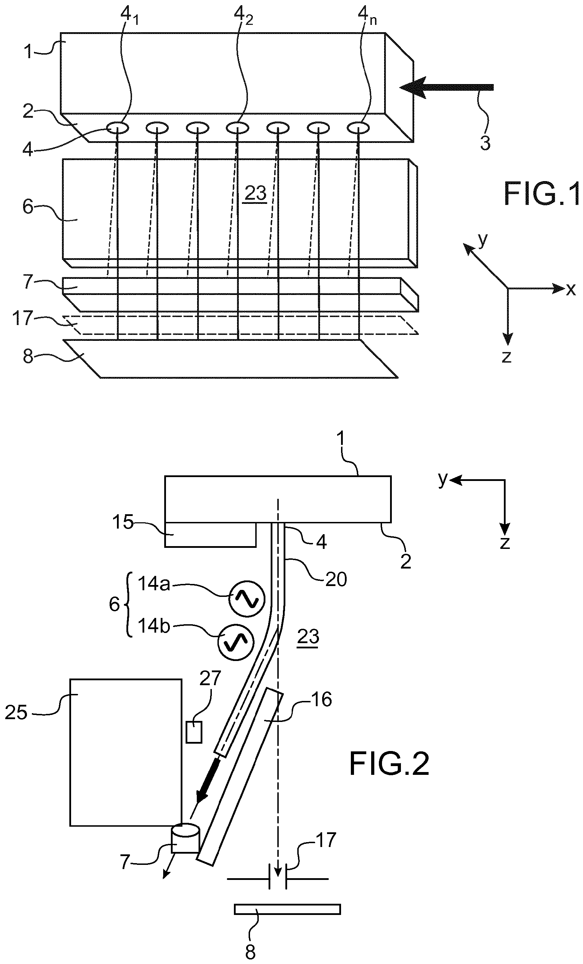

A general structure of a print head is described below with reference to figure 1.

The head includes a drop generator 1. This generator comprises an integer number n of nozzles 4 aligned on a nozzle plate 2 along an X axis (lying in the plane of the figure), including a first nozzle $4_1$ and a last nozzle $4_n$.

The first and the last nozzles ($4_1$, 4n) are the nozzles with the greatest distance between them.

Each nozzle has a jet emission axis parallel to a Z direction or axis (located in the plane of figure 1), perpendicular to the nozzle plate and to the X axis mentioned above. A third axis, Y, is perpendicular to each of the X and Z axes, the two X and Z axes extending in the plane of figure 1.

The nozzle $4_x$ can be seen on the figure. Each nozzle is in hydraulic communication with a pressurized stimulation chamber. The drop generator comprises one stimulation chamber for each nozzle. Each chamber is provided with stimulation means or an actuator, for example a piezo-electric crystal. An example design of a stimulation chamber is described in document US 7 192 121.

The stimulation means produce a wave in each stimulation chamber. This wave propagates to the jet that exits from the chamber. Consequently, the surface of the jet is deformed and includes widened and narrowed zones. If a narrowed zone is larger than or equal to the jet radius, it will cause a break in the jet. If two breaks in the same jet are consecutive, a jet segment is formed that will transform into an ink drop, under the action of the surface tension of the ink.

The break length is fixed by the energy added by a pulse and therefore is not dependent on the pulse repetition frequency.

The velocity of each jet depends particularly on the pressure applied on the ink in each chamber, the viscosity of the ink and the diameter of each nozzle $4_x$.

There are sort means or a sort module 6 downstream from the nozzle plate, that will separate drops or jet segments to be used for printing from drops or jet segments not used for printing.

The drops or jet segments emitted by a nozzle and that will be used for printing follow a trajectory along the Z axis of the nozzle and strike a print support 8, after having passed through an outlet slit 17. The slit is open to the outside of the cavity and ink drops to be printed exit through it; it is parallel to the X direction of nozzle alignment, the Z direction axes of the nozzles passing through this slit, that is on the face opposite the nozzle plate 2. Its length is equal to at least the distance between the first and the last nozzle.

Drops or jet segments emitted by a nozzle and not intended for printing, are deviated by means 6 and are recovered in a catcher 7 and then recycled. The length of the catcher along the X direction is equal to at least the distance between the first and the last nozzle.

Figure 2 represents the operating principle of a print head that can be used in the framework of the invention.

This figure is a sectional view made in a plane parallel to the YZ plane, containing the Z axis of a nozzle 4. The shape of the representation of each section remains the same over the distance from the first nozzle $4_1$ to the last nozzle $4_n$ along the X direction (perpendicular to the plane in figure 2).

The drop generator is equipped with a shielding electrode 15. This electrode extends perpendicular to the plane of figure 2 and is therefore common to all jets. During operation, this electrode may be brought to the same potential as the ink. Drops that break facing this electrode are not electrically charged and are therefore neutral.

The print head is also provided with a set 6 of two electrodes 14a, 14b (or 2 electrodes 14a, 14b each associated with a grounded electrode), positioned along the path of a jet 20 produced by the generator 1. These electrodes extend perpendicular to the plane of figure 2 and are therefore common to all jets.

A flap 16 can be provided to separate ink segments that are directed towards the catcher 7 from drops that are sent to a substrate 8 on which printing is to be done.

A recovery heel or module 25 can be provided. In practical terms, a single ceramic part is made comprising the heel or module 25 and the electrode block 6.

The electrodes 14a and 14b are then silk-screen printed on the upper part. Said single part closes the space that separates the electrodes from the catcher.

During printing, such a head functions as follows.

The 2 electrodes 14a, 14b generate a variable electric field E to which the jet 20 and all other jets are exposed; they are powered at variable potentials to achieve this.

In particular, according to one embodiment, the electrodes can be powered such that the temporal average of the electric field E is zero, or practically zero, or low; thus, the jet 20 is electrically neutral in the influence zone of the electrodes 14a, 14b; however, the positive and negative charges distributed in the jet 20 by the electrodes are separated, such that a deflection can be guaranteed. Thus, at all times, the quantity of charge with a positive sign induced on the jet 20 by the electrode powered by a negative signal is practically equal to the quantity of charge with a negative sign induced on the jet 20 by the electrode powered by a positive signal. Therefore there is no or little circulation of electrical charges over long distances in the jet 20, particularly between the nozzle 4 and the electrical influence zone of the electrodes.

In one preferred embodiment, the 2 electrodes have the same geometry and, when printing, the electrical signals for each electrode have identical amplitude, frequency and shape, but are out of phase (in phase opposition for the pair of electrodes).

The two electrodes can have the same dimension h along the direction of the hydraulic trajectory A, separated by an electrical insulator. Each electrode can be powered by a variable high voltage signal with a given amplitude $V_0$, with identical frequency F and shape but that are 180° out of phase. The electrodes 22, 24 and the insulator 26 are preferably at approximately the same distance from the hydraulic trajectory defined by the axis of an undeviated jet output from the nozzle 4, the influence zone of the electrodes 14a, 14b extends towards the jet 20, over a short distance.

At a given time to, the first electrode 14a with positive charge induces a charge with the opposite sign (-) on the surface of the facing jet 20, creating an attractive force between the portion of the jet under electrostatic influence and the electrode 14a. Similarly, the negatively charged electrode 14b induces a charge with the opposite sign (+) on the portion of the jet 20 facing it, also creating an attractive force proportional to the square of the induced charge. Under the action of the forces created by the two electrodes 14a, 14b, the jet 20 is deviated from its hydraulic trajectory and tends to move towards the electrodes 14a, 14b.

In this configuration that is symmetric regarding the signal but also the geometry of the electrodes, the electrostatic action induces an electric dipole in the jet 20, the charges involved in the dipole originating from separation of the positive and negative charge carriers (the ions) inside the jet 20. It should be noted that this charge separation phenomenon is different from the charge transfer mechanism by conduction from the nozzle plate 4 (in which the jet 20 is for example grounded) to the influence zone of the electrodes 14a, 14b. In particular, the jet 20 remains at zero average charge if the ink, the reservoir and the nozzle 4 are grounded.

The result obtained is thus a deflection of a continuous jet 20 through localised charges, without charging the complete jet.

The required effect with the structure described above is to make the jet and all other jets in the influence zone of the electrodes 14a, 14b electrically neutral, while separating positive charges from negative charges. Any other combination of electrodes (size, potential, distribution, number) capable of satisfying these two conditions respects this principle. Figure 2B in FR 2906755 illustrates an example (not reproduced herein), in which the set of electrodes 20 comprises an alternation of electrodes brought to the same potential with electrodes brought to the opposite potential; the electrodes are separated by insulators, preferably all with the same nature and dimensions.

As a variant, any of the other electrode structures presented in document FR 2906755 can be used.

Aspects described in this document related to production of the different envisaged solutions can also be used in the framework of this invention.

In particular:

- the length of jet segments said to be deflected and not used for printing is preferably greater than or equal to the total height L of the electrodes network (measured along the Z axis);

- and/or the length of jet segments said to be undeflected and that will form drops to be printed is preferably less than the shortest distance H separating two adjacent electrodes;

- and/or the electrodes are preferably coated with an electrically insulating layer. This insulating layer improves safety. It makes it possible to apply higher voltages to coated electrodes. This insulator also makes it possible to cut off dc field components.

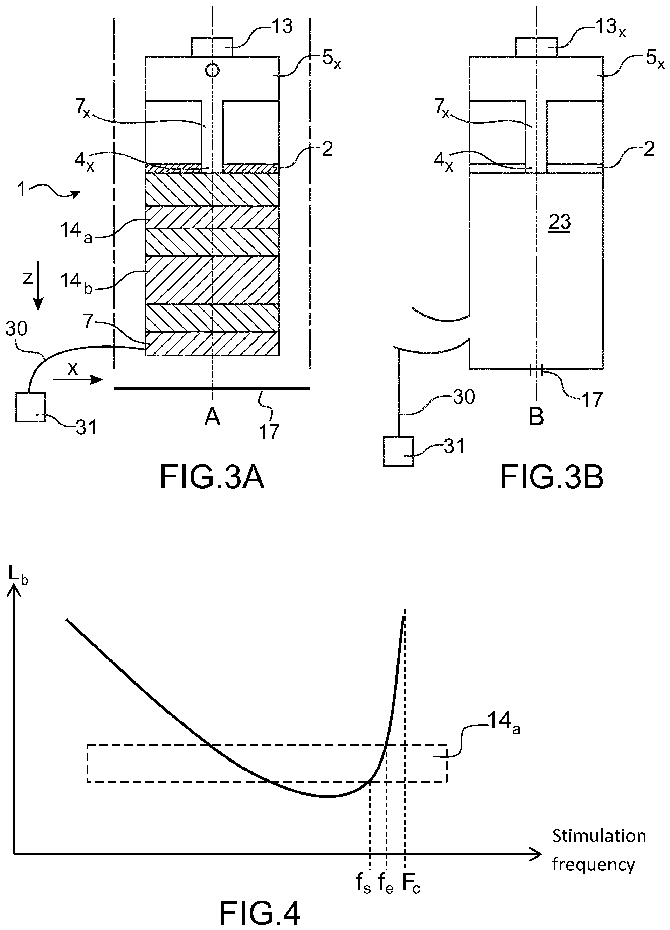

An example of a particular embodiment of a print head is shown in figures 3A and 3B, in sectional view in a XZ plane and a YZ plane respectively.

These figures use the same references as the previous figures to designate technically identical or equivalent elements. References 5X and 7X designate a stimulation chamber and a conduit leading from this chamber to the nozzle $4_x$, respectively.

As explained above, the field generated by the two electrodes 14a, 14b is globally cancelled when the two electrodes are brought to exactly the same potential but with a phase shift of 180°. In this case the jet does not carry any charge, since the jet segment facing the two electrodes is globally neutral.

A measurement according to one embodiment of the invention is made by bringing the electrode 14a to an alternating charge potential while the electrode 14b is grounded. Conversely, as a variant, electrodes 14a and 14b can be grounded and the potential can be applied to the shielding 15; and as another variant the electrodes 14a, 14b and 15 can be grounded and the potential can be applied to another electrode (preferably also extending perpendicular to the plane of figure 2 and therefore common to all jets), for example located between the electrode 14b and the catcher 7. In general, the jet, or each jet, is broken facing the electrode to which a potential (called the charge potential), different from the jet potential, is applied. The jet segment, or each jet segment, is then charged and a signal related to the presence of electrical charges can be detected. When the jet, or each jet, is charged, these conditions are different from the conditions in which a printout can be made and that were described above (and for which the jet is not charged).

If the charge potential is applied to an electrode other than electrodes 14a, 14b, the segment may be deviated, for example towards the catcher 7, using deviation voltages applied to electrodes 14a, 14b.

In general, the device comprises a charge electrode (preferably extending perpendicular to the plane of figure 2 and therefore common to all jets), this charge function possibly being performed by one of the electrodes 14a, 14b, called deviation electrodes. In other words, in this case, one of the electrodes 14a, 14b, called the deviation electrodes, acts as the charge electrode. But as a variant, this function can be performed by another electrode.

Therefore a detection method according to the invention can be implemented before and/or after a printout on a substrate 8 (figure 1).

In the framework of a detection method according to the invention, a jet is produced by a stimulation chamber. This is done by activating stimulation means, for example piezoelectric means, of this chamber by applying jet break pulses, for example in the form of a periodic voltage V at at least one frequency f.

When the value of this frequency becomes greater than a value $F_c$, called the cutoff frequency, the ink jet is no longer broken into drops in a controlled manner (it is broken, but naturally) and it does not carry any electric charge. This frequency $F_c$ is related to the velocity of the jet $V_j$, by the relation:

$$V_j = 2\pi \, R F_c \, / \, k_c \ (1)$$

In this relation, R represents the radius of the jet; a correction factor $k_c$ is applied to it that takes account particularly of the ink characteristics and the nozzle diameter.

The natural break of a jet is explained in the paper by J.W. Strutt and Lord Rayleigh "On the instability of jets", Proceedings of the London mathematical society, vol.1, p. 4-13 and in J. Eggers, E. Villermaux, "Physics of liquid jets", Rep. Prog. Phys. 71, 036601 (2008).

For the cutoff frequency and for frequencies higher than the cutoff frequency, the jet is no longer broken facing the charge electrode and the jet is no longer electrically charged.

The cutoff frequency is the frequency starting from which the stimulation has no effect on the jet. The stimulation effect drops very quickly when approaching this frequency. Just before this frequency, the simulation effect is reduced to the point of increasing the break distance (see figure 4), between $f_e$ and $f_c$: the jet is then still stimulated but no longer sufficiently to reduce the break distance and to bring it in front of the charge electrode.

On the other hand, when this frequency f is less than the cutoff frequency $F_c$, the jet is broken in a controlled manner and not naturally, and the distance from the break to the nozzle outlet will change as a function of f, as shown diagrammatically in figure 4. This figure also shows the position of the electrode 14a. The jet can be charged if the break takes place facing this electrode. Therefore it can be charged if the frequency is included within a narrow interval between fe and fs, close to Fc . There is almost no change to this scheme when the charge voltage is applied to another electrode, particularly the electrode 15; in particular, the fact that the break is within the influence zone of the electrode is considered, and in this respect, the scheme is not or is only slightly modified.

As can be seen on this figure, the slope of the curve for frequencies less than but close to the cutoff frequency, is fairly steep. Consequently, when the frequency becomes less than the cutoff frequency, a slight reduction in the cutoff frequency will shift the break location to face the charge electrode, for example electrode 14a, so that the ink segment concerned can be charged, and can be deviated towards the catcher; the segment charge can be detected, for example by a charge detector located on the ink trajectory towards the catcher, or by a conducting catcher that can be connected to a detector.

For example, if the stimulation frequency is reduced in steps, one of the values of the frequency will be equal within a few steps to the cutoff frequency or will be close to it. For this frequency, the jet is broken in front of the charge electrode, for example the electrode 14a, and charges are carried by this jet. The current detector records a current passage and the applied stimulation frequency f is then close to or similar to the cutoff frequency $F_c$.

In one variant, a frequency scan is made in the opposite direction to that described above, in other words by increasing the frequency. The stimulation frequency of the jet (or jets) is increased, preferably controlled in time, starting from a value less than the theoretical cutoff frequency. As long as the value of the stimulation frequency of a jet is less than the cutoff frequency Fc, this jet is broken into drops in a controlled manner. The current is detected by the current detector for a frequency approximately equal to Fc (in fact within the interval in which the jet can be broken facing the charge electrode, for example the electrode 14a). When the stimulation frequency reaches the value of the cutoff frequency Fc, the jet is no longer broken into drops in a controlled manner as above, but naturally, and then no charge is detected for this jet. For example, ink segments are deviated towards the catcher (or more generally are sent to the catcher) but the current stops circulating in the catcher or the detector stops detecting charges. Detection that this current has stopped or that there are no charges provides a means of concluding that the value of the stimulation frequency is the cutoff frequency of the jet Fc.

Therefore the cutoff frequency can be identified by modifying the behaviour or the charge of- the jet as it passes through this frequency in one direction or another depending on the direction of the frequency variation; it may then be possible to deduce the jet velocity, knowing the parameters kc and R.

Consequently, according to one possible embodiment of a method according to the invention:

- the voltage mentioned above is applied to the charge electrode, for example to the electrodes 14a and 14b (or to electrode 15 or to another electrode),
- a signal is applied to the stimulator of the stimulation chamber that is in hydraulic communication with the particular nozzle that emits a jet, at a repetition frequency f that is higher or lower than the jet cutoff frequency Fc, and this frequency is then reduced or increased respectively.

When it reaches a value at which the ink segment can break, or no longer breaks, for example facing the electrode 14a (or more generally the electrode to which the charge voltage is applied), the effect of the charge mentioned above is obtained or is no longer obtained respectively.

Detection of the appearance or disappearance (or the instant of this detection) of the measured current, that corresponds to charges carried by the ink segment, can be correlated with the value of the frequency of the signal applied to the stimulator, said frequency value being very close to or approximately equal to the cutoff frequency of said jet.

The frequency value that enables the ink segment to break, or to no longer break, facing the charge electrode, for example the electrode 14a, can be taken as a good estimate of this cutoff frequency.

If the print head is cleaned correctly, the application of a method according to the invention to all nozzles successively provides a means of identifying that all nozzles have practically the same cutoff frequency (and therefore practically the same jet velocity).

On the other hand, if one or several nozzles of the print head are blocked or not well cleaned, application of a method according to the invention to all nozzles successively can identify that, for jets emitted by these defective nozzles, no signal can be observed when the frequency is close to the cutoff frequency Fc, but that a signal can be detected at a frequency which is at a distance from the cutoff frequency Fc.

According to one embodiment, during a measurement method according to the invention, a stimulation is applied at a frequency f that varies passing through the cutoff frequency $F_c$, to the stimulator of one of the stimulation chambers, but no stimulation signal is applied to the stimulators of the other stimulation chambers. The same test is then made for another stimulation chamber. Thus, the measurement is made successively jet by jet. The cutoff frequencies obtained for the different jets can be compared with each other or with a predetermined value. If the cutoff frequencies are all practically identical, then the head can be used for a printout.

According to one embodiment, during a measurement method according to the invention, a stimulation is applied simultaneously once again at a frequency f that varies passing through the cutoff frequency $F_c$, to a plurality of stimulators of a plurality of stimulation chambers, for example to all stimulators of all stimulation chambers. For a defective nozzle, a charge signal will be measured or will appear, but at a frequency different from the frequency at which the charge signal is measured or appears for each of the other jets. For example, if a single jet is defective, the other jets will have the same cutoff frequency $F_c$, and a charge signal will be associated with these other jets at the same frequency fo < $F_c$. On the other hand, the defective jet will have a cutoff frequency F'c that will be different from Fc, and therefore a charge signal associated with this jet can be detected for a frequency $f'_0 < F'_c$. Identifying the appearance of such a charge signal at a frequency different from the frequency at which this charge signal appears for the other jets, is sufficient to conclude that there is a defect in the print head, and for example to clean the print head.

The frequency f of the pulse signal applied to the stimulator(s) of the chamber(s) from which the jet(s) to be tested is (are) emitted can be reduced (or increased), preferably in a manner controlled in time, for example at fixed steps.

The frequency can be reduced or increased starting from a value that is known to be higher or lower respectively than a frequency called the theoretical cutoff frequency. The theoretical cutoff frequency can be taken to be equal to the value of the cutoff frequency when the jet is at its nominal speed, for example 14 m/s. In the case of a reduction in the frequency, when the frequency becomes less than but very close to the theoretical cutoff frequency, the jet is broken into drops as explained above; the drops output from this jet are then electrically charged. In the case of an increase in the frequency, when the frequency becomes more than the theoretical cutoff frequency, the jet, that was broken into drops as explained above, is no longer broken into drops and then no electrical charge is detected.

One or several measurements can be made for each jet, according to one of the embodiments described above. For each measurement, the frequency is scanned to pass through the cutoff frequency. Once all the jets have been tested and if the cutoff frequency is approximately the same and therefore the velocity is approximately the same for all jets, a printout can be made but with a different electrode operating method from that used during a measurement. If a single jet is tested negatively (in other words if the cutoff frequency or the jet velocity is not equal to the cutoff frequency or the velocity respectively of the other jets and/or a reference frequency or a reference velocity respectively), then it would be advantageous to clean the head before starting printing.

In the framework of the invention, an electric signal can be detected due to charges carried by each ink segment, making use of charge detection means, for example using:

- the catcher 7 if the catcher is made of a conducting material and if the ink segments are deviated during the measurement; it is then connected to current detection means 31,
- in the case in which the ink segments are not deviated during the measurement, they can be recovered in a catcher made of a conducting material, preferably free to move, positioned on the trajectory of the segments for the measurement; this catcher is withdrawn during print phases; this catcher may be the mobile catcher 7; as a variant, another mobile catcher can be used for this detection, with the catcher 7 being fixed; the detection catcher is once again connected to current detection means 31 during a measurement;
- or as a variant, an electrode 27 can be used, for example in the form of a line located under the deflection electrodes 14a, 14b, for example at mid-height of the module 25 (as shown diagrammatically on figure 2); it is connected to current detection means during a measurement.

These means (catcher made of a conducting material or electrode) can be connected to signal processing means that may comprise filter means to select signals at the required frequencies. In particular, in the case of detection by a conducting catcher, the electric current is clocked by the arrival of drops (or splashing) in this catcher, therefore the HF component that represents the landing mechanism of the drop in this catcher can be filtered.

These signal processing means can make use of the controller itself and/or the controller may include such signal processing means.

The jet velocity can be deduced using the above mentioned relation. But it is not necessarily useful to calculate the velocity or even the order of magnitude of the velocity. The most useful information will be related to whether or not the behaviour of all nozzles is identical close to a single cutoff frequency $F_c$.

As a variant, the method according to the invention can be used to check the cutoff frequency or the velocity to check that it remains within an acceptable cutoff frequency interval (Fc1 - Fc2) or velocity interval (V1 - V2) and possibly to detect that the cutoff frequency or the velocity of a jet goes outside this interval.

The jet velocity can be measured optically by display means (for example by using a camera to take a photograph of the set of jets or by using a camera to display this set of jets) or can be calculated using known or measured parameters such as the pressure in the stimulation chamber, the thickness $D_b$ of the nozzle plate, the nozzle diameter, the ink density or its surface tension. This provides a means of calculating a theoretical cutoff frequency $F_{ct}$.

In one embodiment, the theoretical cutoff velocity, $V_j$ is 14.07m/s, kc.R is equal to 10.3 $\mu$m and Fc is equal to 218 kHz. A variation of the cutoff frequency equal to 1 kHz causes a velocity variation of 0.06 m/s. Therefore it would be possible to begin scanning for example at 224 kHz, namely about 3% above the theoretical velocity, and then to go down by successive steps of 1 kHz, until a current is detected in the catcher.

Regardless of the envisaged embodiment, it is possible to perform a first measurement with a first jet, to use this measurement to deduce the values of the coefficients of kc and R, and then to use these values to test the behaviour of the other jets, as explained above.

In all cases, the measured or estimated cutoff frequency can be compared with a predetermined reference value or a value obtained by measuring one or several among the other jets; or it can be compared with the theoretical cutoff frequency.

The invention has been described above in an embodiment in which the activation frequency of the stimulation means of one or several stimulation chambers is varied.

But as a variant, it is also possible to fix an activation frequency for all chambers concerned, for example a frequency of 200 kHz, and the velocity of the jet to be studied can be varied. Such a velocity variation can be obtained by a pressure variation in the ink supply circuit of the print head. This pressure variation can be the result of variations of operating conditions of one or several pumps and/or valves in this supply circuit.

A velocity variation can be used to reach the velocity for which the activation frequency fixed for the formation of jets, for example 200 kHz, corresponds to the cutoff frequency Fc.

An increase (this is the case particularly when the machine is started ready for printing) or a reduction of the velocity can be made to reach the velocity for which equation (1) above is satisfied. The effects explained above then occur, with the jet breaking facing the electrode to which the charge voltage is applied, for example electrode 14a, and charging of the ink segment thus formed, the charge being detectable in the manner previously described above. Depending on the direction of variation of the velocity, this effect will occur before or after passing through the velocity for which the frequency of the applied stimulation is close to or is equal to the cutoff frequency. It is thus determined that the previously fixed operating frequency is practically identical to the cutoff frequency. The same test can be repeated for several other jets, and even for all jets and stimulation chambers.

If, for all the jets, it is found that the activation frequency is approximately equal to the cutoff frequency for a same jet velocity, then the head is in good operating condition and a printout can be made.

On the other hand, if it is found that the activation frequency is not practically equal to the cutoff frequency for one or several jets at a given jet velocity, although this is the case for the other jets for the same jet velocity, then the head is not in good operating condition. The head can then be cleaned before a printout is made.

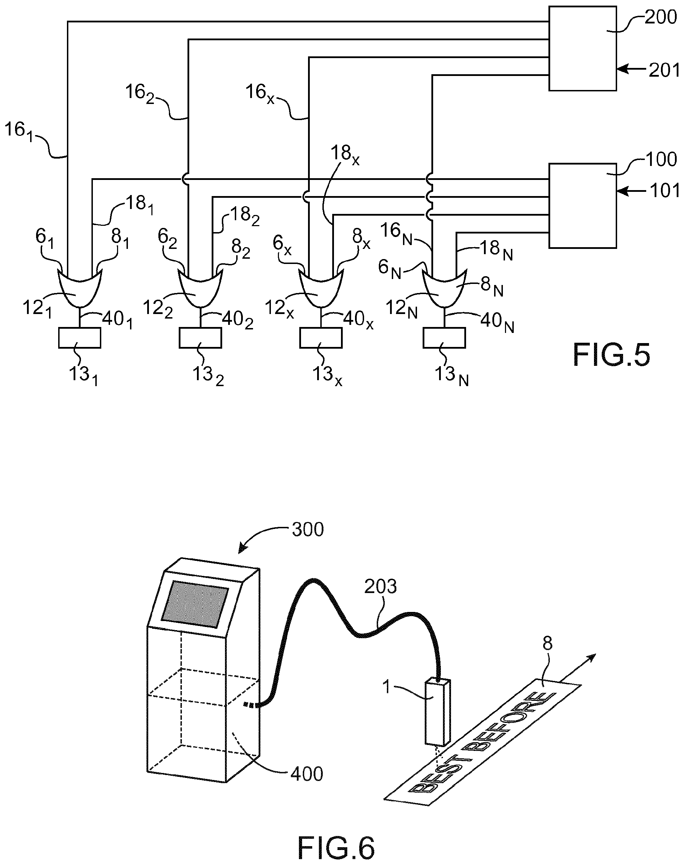

Figure 5 shows an example of a schematic of an electronic circuit adapted to select the stimulator(s) $13_1,...13_N$ to which a stimulation signal will be applied at a frequency that is variable in steps with adjustable step durations. This diagram represents 4 stimulation chamber stimulators $13_1,...13_N$. Naturally, the real number of stimulators is equal to the number of jets, for example of the order of about a hundred for a binary continuous jet printer.

In the example shown on figure 5, the electronic circuit comprises a stimulation signal generator, a logic control generator 200, and one gate $12_1,...12_N$ for each stimulator $13_i$ (i=1,...N). Each gate $12_i$ (i=1,...N) comprises a signal input $8_i$ (i=1,...N). and a logical control input $6_i$ (i=1,...N). Each signal input $8_i$ is coupled or, as shown on figure 5, is connected to a stimulation signal generator 100 through a stimulation line $18i$ (i=1,...N). Each logical control input $6_i$ (i=1,...N) is coupled or, as shown on figure 5, is connected to the logical control generator 200 through a control line $16_i$ (i=1,...N). Note that all control lines $16_i$ (i=1,...N) can be replaced by a bus receiving the logical signal to be applied to the addresses of the various gates $12_i$ (i=1,...N). An output $40_i$ (i=1,...N) from each gate $12_i$ (i=1,...N) is coupled with, or as shown on figure 5 is connected to a corresponding stimulator $13_i$ (i=1,...N) through a line .

Operation is as follows: the stimulation signal generator 100 receives the value of the repetition frequency of the stimulation signal to be applied to the signal input $8_i$ (i=1,...N) of the gates $12_i$ (i=1,...N), through a command 101. The logical control generator 200 receives the addresses of the gates to be opened, through a command 201. For these gates, the logical level is for example brought to 1 while the logical level of closed gates remains equal to 0.

Regardless of which embodiment is envisaged, the instructions to apply the required stimulation frequency(ies) and to vary this or these stimulation frequencies and to activate the stimulation means of each stimulation chamber are sent by control means (also called "controller"). These control means also send the instructions that will enable circulation of ink under pressure towards the means $4_1$-$4_n$, then generate jets as a function of motifs to be printed on a support 8.

These control means can also process or analyse signals detected within the framework of a method according to the invention.

These control means may for example be made in the form of a processor or a microprocessor, or an electric or electronic circuit capable of implementing or being programmed to implement a method according to the invention.

This controller controls means of stimulating the stimulation chambers, the means of pumping the printer and particularly the catcher, and the means of opening and closing valves on the trajectory of the different fluids (ink, solvent, gas). The control means can also memorise data, for example data for measurement of ink levels in one or more reservoirs, and process these data if required.

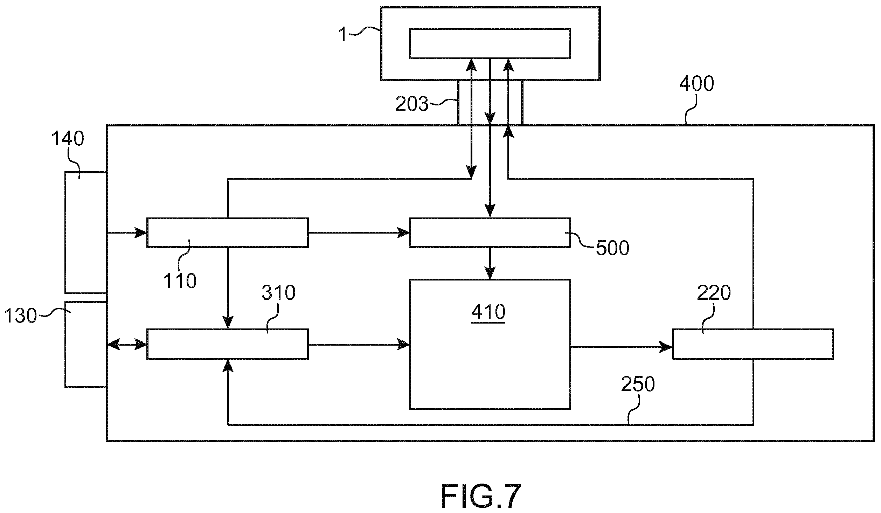

Figure 7 shows the main blocks of an inkjet printer that can implement one or several of the embodiments described above. The printer comprises a console 300, a compartment 400 containing particularly the ink and solvent conditioning circuits, and reservoirs for ink and solvents (in particular, the reservoir to which ink recovered by the catcher is returned). In general, the compartment 400 is in the lower part of the console. The top part of the console comprises the control electronics and display means. The console is hydraulically and electrically connected to a print head 100 through an umbilical 203.

A portal frame not shown is used to install the print head facing a print support 8, which moves along a direction materialised by an arrow. This direction is perpendicular to an alignment axis of the nozzles.

The drop generator comprises nozzles and a cavity of the type according to one of the embodiments described above, with electrodes and particularly electrodes 14a, 14b and means of applying voltages, or one or more voltage supply, to them for printing or alternatively, a method of detecting the presence of a jet according to the invention.

The invention is particularly applicable to the case of a nozzle plate with 64 nozzles, but the invention is also applicable to the case of a nozzle plate with a smaller number of nozzles, for example 32, or to the case of a nozzle plate with a larger number of nozzles, for example 128. The jet velocity may be between 5 m/s and 25 m/s, for example it is about 15 m/s.

An example of a fluid circuit 400 of a printer to which the invention can be applied is illustrated in figure 6. This fluid circuit 400 comprises a plurality of means 410, 500, 110, 220, 310, each associated with a special function. There is also the head 1 and the umbilical 203.

This circuit 400 is associated with a removable ink cartridge 130 and a solvent cartridge 140 that is also removable.

Reference 410 designates the main reservoir that collects a mix of solvent and ink.

Reference 110 designates the assembly of means of drawing off and possibly storing solvent from a solvent cartridge 140 and providing solvent thus drawn off to other parts of the printer, either to supply solvent to the main reservoir 410, or to clean or maintain one or several other parts of the machine.

Reference 310 designates the assembly of means of drawing off ink from an ink cartridge 130 and providing ink thus drawn off to supply the main reservoir 410. As can be seen on this figure, according to the embodiment presented herein, these same means 310 are used to send solvent to the main reservoir 410 and from the means 110.

At the outlet from the reservoir 410, an assembly of means globally designated as reference 220 applies pressure to the ink drawn off from the main reservoir, and sends it to the print head 1. According to one embodiment illustrated herein by the arrow 250, it is also possible to use these means 220 to send ink to the means 310, and then again to the reservoir 410, which enables recirculation of ink inside the circuit. This circuit 220 is also used to drain the reservoir in the cartridge 130 and to clean connections of the cartridge 130.

The system shown on this figure also includes means 500 of recovering fluids (ink and/or solvent) that return from the print head, more precisely from the catcher 7 of the print head or the head rinsing circuit. Therefore these means 500 are arranged downstream from the umbilical 203 (relative to the direction of circulation of fluids that return from the print head).

As can be seen in figure 6, the means 110 can also be used to send solvent to these means 500 directly without passing through the umbilical 203 or through the print head 1 or through the catcher.

The means 110 can comprise at least 3 parallel solvent supplies, one to the head 1, the 2nd to the means 500 and the 3rd to the means 310.

Each of the means described above is provided with means such as valves, preferably solenoid valves, that can direct the fluid concerned to the chosen direction. Thus, starting from means 110, solvent can be sent exclusively to the head 1, or to means 500 or to means 310.

Each of the means 500, 110, 210, 310 described above can be provided with a pump to treat the fluid concerned (namely 1st pump, 2nd pump, 3rd pump, 4th pump respectively). These different pumps perform different functions (the functions of each of their means) and are therefore different from each other, even though these different pumps may be of the same type or similar types (in other words none of these pumps performs 2 of these functions).

In particular, the means 500 comprise a pump (1st pump) that pumps the fluid recovered from the print head as explained above, and sends it to the main reservoir 410. This pump is dedicated to the recovery of fluid from the print head and is physically different from the 4th pump of means 310 dedicated to the transfer of ink or the 3rd pump of means 210 dedicated to pressurisation of ink at the outlet from reservoir 410.

The means 110 comprise a pump (the 2nd pump) that pumps solvent and sends it to the means 500 and/or the means 310 and/or to the print head 1.

Such a circuit 400 is controlled by the control means described above that are usually contained in the console 300 (figure 13).

The control means (or the controller) of a printer according to the invention control the frequency of voltages applied to the electrodes and the frequency of signals applied to the stimulation means of each stimulation chamber. They also control processing of signals detected by the charge detection means, for example the catcher or the electrode.

The invention applies in particular to print heads of printers or binary continuous inkjet printers provided with a multi-nozzle drop generator.

**Claims**

1. Method for testing at least one nozzle of a multi-jet print head of an inkjet printer comprising a plurality of nozzles (4), at least one 1st and one 2nd deviation electrode (14a, 14b) for each jet, method in which:

   - at least one jet is formed using said nozzle (9), at a drop formation frequency,
   - an estimate is made of:

      * a cutoff frequency (Fc) of at least this jet, by variation of the jet formation frequency, at a constant jet velocity,
      * or, at constant formation frequency of the drops from at least this jet, by variation of the jet velocity, the velocity at which the cutoff frequency (Fc) is equal to said formation frequency;

   - this cutoff frequency (Fc) or this velocity is compared with a reference value and the functional or non-functional state of at least said nozzle is deduced.

2. Method according to claim 1, in which:

   a) a cutoff frequency (Fc) of said jet is estimated, by variation of the jet drop formation frequency, at constant jet velocity, the cutoff frequency being estimated:

      - by increasing the jet drop formation frequency, at constant jet velocity, and identification of the frequency at which the jet is no longer broken facing a charge electrode (14a, 14b, 15) and is no longer electrically charged,
      - or by reducing the jet drop formation frequency, at constant jet velocity, and identification of the frequency starting from which the jet is broken facing a charge electrode (14a, 14b, 15) and is electrically charged,

or

b) in which the velocity for which the cutoff frequency (Fc) is equal to said formation frequency is estimated at constant jet drop formation frequency by varying the jet velocity, this velocity being estimated:

- by increasing the jet velocity and identification of the velocity for which the jet is no longer broken facing a charge electrode (14a, 14b, 15) and is no longer electrically charged;
- or by reducing the jet velocity and identification of the velocity starting from which the jet is broken facing a charge electrode(14a, 14b, 15) and is electrically charged.

3. Method according to either claim 1 or 2, in which the reference value:

- is the cutoff frequency of drops of at least one other jet or a theoretical cutoff frequency;
- or is the velocity of at least one other jet for which the jet drop formation frequency is equal to the cutoff frequency or a theoretical or nominal velocity.

4. Method according to claim 1 to 3, in which:

- the charge electrode (14a, 14b, 15) is one of the deviation electrodes or a shielding electrode (15) or another electrode, located downstream from the deviation electrodes relative to the trajectory of the jets at the exit from the nozzle;
- and/or in which the charge is detected by a catcher (7) for jets not used for printing, this catcher being made of a conducting material or by a detection electrode.

5. Method according to one of claims 1 to 4, in which:

- each nozzle among a plurality of nozzles of the multi-jet print head is tested successively;
- or a plurality of nozzles of the multi-jet print head are tested simultaneously.

6. Method of printing using an inkjet printer comprising a multi-jet print head, comprising:

- a step to print at least one motif on a support (8),
- stop printing and then implement a method of testing at least one nozzle of said multi-jet print head, according to one of claims 1 to 5;

or:

- implement a method of testing at least one nozzle of said multi-jet print head, according to one of claims 1 to 5,
- stop the test method, then implement a step to print at least one motif on a support (8).

7. Device for testing at least one nozzle of a multi-jet print head of an inkjet printer comprising a plurality of nozzles (4), at least one 1st and one 2nd deviation electrode (14a, 14b) for each jet, this device comprising:

a) adapted means of producing said ink jet by one of the nozzles, at a formation frequency of the drops in this jet,
b) means adapted to vary the frequency of formation of the jet drops at constant jet velocity and means for estimating a cutoff frequency (Fc),

- or means for varying the velocity of the jet at a constant jet drop formation frequency and means for estimating the jet velocity for which the cutoff frequency (Fc) is equal to said formation frequency.

c) means for comparing this cutoff frequency (Fc) or this velocity with a reference value.

8. Device according to claim 7, comprising:

- means adapted for increasing the jet drop formation frequency, at constant jet velocity, and means for identifying the frequency at which the jet is no longer broken facing a charge electrode (14a, 14b, 15) and is no longer electrically charged.
- or means adapted to reduce the jet drop formation frequency, at constant jet velocity, and means for identifying the frequency starting from which the jet is broken facing a charge electrode (14a, 14b, 15) and is electrically charged.

9. Device according to claim 7, comprising:

- means adapted for increasing the jet velocity, at a constant jet drop formation frequency, and means for identification of the velocity at which the jet is no longer broken facing a charge electrode (14a, 14b, 15) and is no longer electrically charged,
- means adapted for reducing the jet velocity, at constant jet drop formation frequency, and means for identification of the velocity starting from which the jet is broken facing a charge electrode (14a, 14b, 15) and is electrically charged,

10. Device according to one of claims 8 or 9, in which the charge electrode (14a, 14b, 15) is one of the deviation electrodes or a shielding electrode (15) or another electrode, located downstream from the deviation electrodes relative to the trajectory of the jets at the exit from the nozzle.

11. Device according to one of claims 7 to 10, comprising a recovery catcher (7) of jets not used for printing, this catcher being made of a conducting material, or a detection electrode, and means of processing a charge signal detected by this catcher (7) or this detection electrode.

12. Device according to one of claims 7 to 11, that is suitable for testing a plurality of nozzles in said multi-jet print head of an inkjet printer, successively or simultaneously.

13. Print device of the inkjet printer type comprising a multi-jet print head, comprising:

    - means of printing at least one motif on a support (8),
    - means of stopping printing and then implementing a method, according to one of claims 1 to 6, for testing one or several nozzles of said multi-jet print head.

14. Print device of the inkjet printer type comprising a multi-jet print head, comprising:

    - means of implementing a method, according to one of claims 1 to 6, for testing one or several nozzles of said multi-jet print head.
    - means of stopping this test method, then printing at least one motif on a support.

15. Inkjet printer comprising:

    - a multi-jet print head,
    - a device for testing at least one nozzle of a multi-jet print head of an ink jet printer, according to one of claims 7 to 14,
    - means of supplying ink and/or solvent to the print head.

FIG.1

FIG.2

**FIG.3A**

**FIG.3B**

**FIG.4**

FIG.5

FIG.6

FIG.7

Europäisches
Patentamt

European
Patent Office

Office européen
des brevets

# EUROPEAN SEARCH REPORT

Application Number

EP 17 20 7683

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | FR 2 906 755 A1 (IMAJE SA SA [FR]) 11 April 2008 (2008-04-11) * page 14, line 3 - page 18, line 11 * * figures * | 1,7, 13-15 | INV. B41J2/025 B41J2/105 B41J2/12 B41J2/125 |
| Y | US 4 063 252 A (JENSEN DONALD FREDERICK ET AL) 13 December 1977 (1977-12-13) * column 4, line 9 - column 8, line 64 * * figures * | 1,7, 13-15 | |
| A | FR 2 934 810 A1 (IMAJE SA [FR]) 12 February 2010 (2010-02-12) * page 28, line 16 - page 29, line 21 * * figures * | 1,7 | |
| A | US 3 787 882 A (WEST D ET AL) 22 January 1974 (1974-01-22) * column 4, line 48 - column 5, line 40 * * figures * | 1,7 | |

TECHNICAL FIELDS
SEARCHED     (IPC)

B41J

The present search report has been drawn up for all claims

| Place of search | Date of completion of the search | Examiner |
|---|---|---|
| The Hague | 16 April 2018 | Didenot, Benjamin |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 17 20 7683

This annex lists the patent family members relating to the patent documents cited in the above-mentioned European search report.
The members are as contained in the European Patent Office EDP file on
The European Patent Office is in no way liable for these particulars which are merely given for the purpose of information.

16-04-2018

| Patent document cited in search report | | Publication date | Patent family member(s) | | Publication date |
|---|---|---|---|---|---|
| FR 2906755 | A1 | 11-04-2008 | AT 547250 T | | 15-03-2012 |
| | | | CN 101522424 A | | 02-09-2009 |
| | | | EP 2086765 A1 | | 12-08-2009 |
| | | | ES 2382908 T3 | | 14-06-2012 |
| | | | FR 2906755 A1 | | 11-04-2008 |
| | | | JP 5159782 B2 | | 13-03-2013 |
| | | | JP 2010505650 A | | 25-02-2010 |
| | | | US 2010045753 A1 | | 25-02-2010 |
| | | | WO 2008040777 A1 | | 10-04-2008 |
| US 4063252 | A | 13-12-1977 | CA 1098160 A | | 24-03-1981 |
| | | | DE 2744701 A1 | | 18-05-1978 |
| | | | FR 2370521 A1 | | 09-06-1978 |
| | | | GB 1577155 A | | 22-10-1980 |
| | | | IT 1114438 B | | 27-01-1986 |
| | | | JP S577911 B2 | | 13-02-1982 |
| | | | JP S5361337 A | | 01-06-1978 |
| | | | US 4063252 A | | 13-12-1977 |
| FR 2934810 | A1 | 12-02-2010 | CN 102119082 A | | 06-07-2011 |
| | | | EP 2313275 A2 | | 27-04-2011 |
| | | | FR 2934810 A1 | | 12-02-2010 |
| | | | US 2011193908 A1 | | 11-08-2011 |
| | | | WO 2010018169 A2 | | 18-02-2010 |
| US 3787882 | A | 22-01-1974 | DE 2346558 A1 | | 11-04-1974 |
| | | | FR 2197343 A5 | | 22-03-1974 |
| | | | GB 1408657 A | | 01-10-1975 |
| | | | IT 989311 B | | 20-05-1975 |
| | | | JP S5838317 B2 | | 22-08-1983 |
| | | | JP S50105733 A | | 20-08-1975 |
| | | | US 3787882 A | | 22-01-1974 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5160939 A
- FR 2636884
- US 7192121 B
- FR 2906755

**Non-patent literature cited in the description**

- **J.W. STRUTT ; LORD RAYLEIGH.** On the instability of jets. *Proceedings of the London mathematical society,* vol. 1, 4-13
- **J. EGGERS ; E. VILLERMAUX.** Physics of liquid jets. *Rep. Prog. Phys.,* 2008, vol. 71, 036601